# EUROPEAN PATENT SPECIFICATION

(11) **EP 2 658 747 B1**
(45) Date of publication and mention of the grant of the patent: **13.09.2017**
(21) Application number: 11813832.0
(22) Date of filing: 28.12.2011
(51) Int. Cl.: B60R 16/02, F16L 3/26

(54) **WIRE HARNESS**
KABELBAUM
FAISCEAU DE CÂBLES

(30) Priority: 28.12.2010 JP 2010292020
(43) Date of publication of application: 06.11.2013
(73) Proprietor: Yazaki Corporation, Minato-ku Tokyo 108-8333 (JP)
(72) Inventor: TOYAMA, Eiichi, Kosai-shi Shizuoka (JP)
(74) Representative: Grünecker Patent- und Rechtsanwälte PartG mbB
(86) International application number: PCT/JP2011/080599
(87) International publication number: WO 2012/091175

(56) References cited:
- EP-A1- 1 544 046
- FR-A1- 2 809 157
- US-A1- 2004 164 576
- US-A1- 2007 017 591

## Description

### Technical Field

The present invention relates to a wire harness having a wire holding function.

### Background Art

A wire harness disclosed in the below described Patent Literature 1 is configured including three high voltage electric wires and three metal protection pipes that receive and protect each of the three high voltage electric wires. The high voltage electric wire is provided to connect a motor that is mounted at a front part of a vehicle and an inverter that is mounted at an intermediate part or a rear part of the vehicle each other.

The wire harness is arranged through a floor body of the vehicle that is outside of a vehicle frame. Thus, the metal protection pipe is formed to protect the high voltage electric wire from stone splash or water splash. The metal protection pipe has a stiffness to protect the high voltage electric wire from stone splash or water splash and to prevent the high voltage electric wire from bending. Simultaneously, the metal protection pipe also has an electromagnetic shield function since it is made of metal.

The wire harness is manufactured by inserting the high voltage electric wire into the metal protection pipe in a straight state, inserting is performed to three pipes and then bending the metal protection pipe along arrangement route of the wire harness at the floor body of the vehicle. The wire harness is manufactured as described above in a factory of a harness maker, transported to an assembly factory of a vehicle maker and assembled in a predetermined position of the vehicle. Accordingly, the arrangement is completed.

A wire harness according to the preamble of claim 1 is known from US 2004/0164576 A.

### Citation List

### Patent Literature

Patent Literature 1: JP-A-2004-224156

### Summary of Invention

### Technical Problem

In the above described related art, the metal protection pipe that is an outer member also functions as a wire holder of the wire harness. As the wire holder, a protector made of resin is given as an example of an appropriate member besides the metal protection pipe.

Regarding the protector, there is a problem in that since the protector is a molding product that is molded using a mold, the material may be able to be obtained at low cost, however the cost of the protector may increase in a case where the cost of the mold increases. In addition, in a case of production in small quantity, there is a problem in that the cost of the protector also increases according to depreciation of the mold. When the cost of the protector increases, there is a problem in that the cost of the entire wire harness increases.

The protector has a problem in that a lead time of beginning work of the mold is long such that creating of a drawing of the mold should be completed in a short time, as a result, cumbersome design change tends to occur and design man-hours are spent. In addition, when the design is changed, there is a problem in that cost and time are spent. Furthermore, since the protector is exclusive dedicated member in each vehicle that is an arrangement object, there is a problem in that versatility is low. If the versatility is low, there is a problem in that it causes the increase of the cost.

The invention is made considering the above described situation to provide a wire harness that is low cost and has versatility regarding a wire holding.

### Solution to Problem

In order to solve the above described problem, a wire harness according to a first aspect of the invention, wherein a wire holder that has stiffness and is formed by bending the strip is used, as a member that holds wires by holding a curvature of a bending part of one or a plurality of wires, or a curvature provided an outer member in the bending part that is provided outside of the wire, wherein the wire holder has a pair of retaining arms that retain opposite ends of the bending part and a connecting arm that connects the retaining arms, and wherein a first unbending stopper of which an intermediate part is contacted at an inside curvature forming portion closer than an outside curvature forming portion of the bending part is formed, or a second unbending stopper that holds the outside curvature forming portion and the inside curvature forming portion alternatively is formed at the connecting arm, characterised in that the pair of retaining arms and the connecting arm and one of the first unbending stopper and the second unbending stopper are one piece formed from said deformed strip.

According to the aspect of the invention, the curvature of the bending part is not held with a protector but with the wire holder. Accordingly, the wire holding of the wire harness is realized.

In the wire harness of a second aspect of the invention according to the first aspect, the outer member may be a corrugated tube.

According to the aspect of the invention, the corrugated tube is used as the outer member and the curvature of the bending part is held as the wire holder at the corrugated tube. Accordingly, the wire holding of the wire harness is realized. A concavo-convex of the corrugated tube is effective as a catching portion in the attachment and fixing of the wire holder.

### Advantageous Effects of Invention

In the invention according to the first aspect, there is an advantage in that since a protector regarding the wire holding is not used, the wire harness that is low cost and has versatility may be present. Except for this, there is an advantage in that since the wire holder is a strip, light-weightedness may be promoted. In addition, there is an advantage in that since it is a strip, a design change is easily performed, and design man-hours, a design lead time or the like may be decreased.

In the invention according to the second aspect, there is an advantage in that since the outer member is also the corrugated tube, the wire harness that is low cost and has versatility may be present.

### Brief Description of Drawings

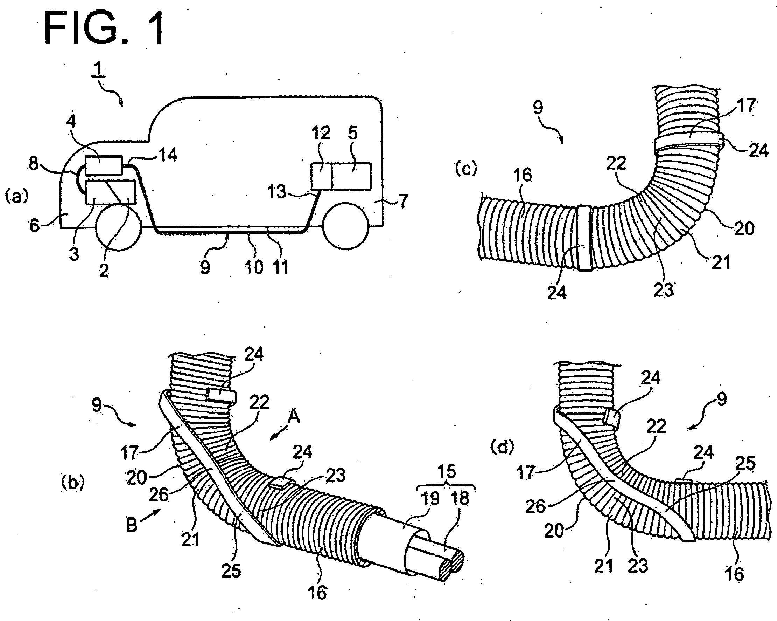

Fig. 1 is a drawing regarding a wire harness of the invention, Fig. 1(a) is a schematic view illustrating an arrangement example, Fig. 1(b) is a perspective view illustrating a bending part and a wire holder, Fig. 1(c) is a side view of the bending part and the wire holder seen from an A direction, and Fig. 1(d) is a side view of the bending part and the wire holder seen from a B direction (a first embodiment).

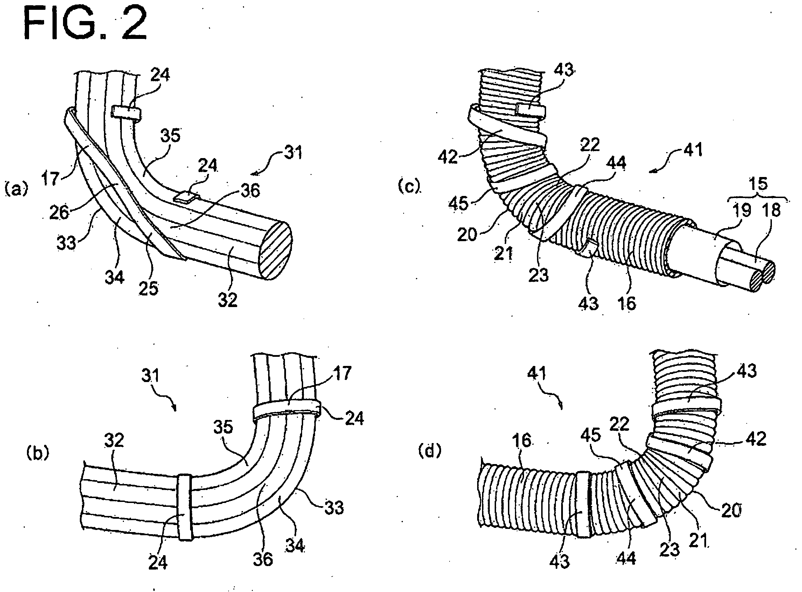

Fig. 2 is a drawing illustrating another example of the bending part and/or the wire holder, Fig. 2(a) to Fig. 2(d) are perspective views and side views thereof (second and third embodiments).

### Description of Embodiments

The wire harness uses a wire holder for the wire holding. A strip with stiffness is bent and forms the wire holder. The wire holder has a pair of retaining arms that retain opposite ends of a bending part respectively, and a connecting arm that connects the retaining arms. A first unbending stopper of which an intermediate part is contacted at an inside curvature forming portion closer than an outside curvature forming portion of the bending part is formed at a connecting arm. Otherwise, a second unbending stopper that holds the outside curvature forming portion and the inside curvature forming portion alternatively is formed at the connecting arm instead of the first unbending stopper.

### First Embodiment

Hereinafter, a first embodiment will be described with reference to drawings. Fig. 1 is a drawing regarding the wire harness of the invention, Fig. 1(a) is a schematic view illustrating an arrangement example, Fig. 1(b) is a perspective view illustrating the bending part and the wire holder, Fig. 1(c) is a side view of the bending part and the wire holder seen from the A direction, and Fig. 1(d) is a side view of the bending part and the wire holder seen from the B direction.

In the embodiment, description will be given regarding an example of the wire harness of the invention that is employed to a hybrid motor vehicle (may also be an electric vehicle).

In Fig. 1(a) - Fig. 1(d), reference numeral 1 illustrates the hybrid motor vehicle. The hybrid motor vehicle 1 is a vehicle where the power of an engine 2 and a motor unit 3 are mixed and drive the vehicle. Electric power is supplied to the motor unit 3 through an inverter unit 4 from a battery 5 (a battery pack). In the embodiment, the engine 2, the motor unit 3 and the inverter unit 4 are mounted in an engine room 6 where front wheels or the like are positioned. In addition, the battery 5 is mounted in a rear part 7 of the vehicle where rear wheels or the like are positioned (may also be mounted in an interior of the vehicle that is at rear side of the engine room 6).

The motor unit 3 and the inverter unit 4 are connected by a known high voltage wire harness 8. The battery 5 and the inverter unit 4 are connected by a wire harness 9 of the invention. The wire harness 9 is configured for a high voltage. The wire harness 9 is configured such that an intermediate part 10 thereof is arranged along ground side of a floor body 11 of the vehicle. The floor body 11 of the vehicle is a known body, a so-called panel member and a through hole (not shown in the drawing) is penetrated therethrough and formed at a predetermined position.

The wire harness 9 and the battery 5 are connected through a junction block 12 that is provided at the battery 5. A rear end 13 of the wire harness 9 is connected to the junction block 12 with a connector. A rear end 13 side of the wire harness 9 is arranged on the floor that is the interior side of the vehicle. A front end 14 side of the wire harness 9 is also arranged on the floor. The front end 14 side of the wire harness 9 is connected to the inverter unit 4 with a connector.

Here, supplementary explanation of the embodiment will be given. The motor unit 3 is configured including a motor and a generator. In addition, the inverter unit 4 is configured including an inverter and a converter. The motor unit 3 is formed as a motor assembly including a shield case. The inverter unit 4 is also formed as an inverter assembly including a shield case. The battery 5 is a Ni-MH base battery or a Li-ion base battery; and is modulated. In addition, for example, an electricity storage device such as a capacitor may be used. The battery 5 is not specifically limited as long as it may be used in the hybrid motor vehicle 1 or the electric vehicle.

First, the configuration and the structure of the wire harness 9 will be described. The wire harness 9 is configured including a wire assembly 15, an outer member 16 that is provided outside of the wire assembly 15 and a wire holder 17.

The wire assembly 15 is configured including two high voltage electric wires 18 and an electromagnetic shield member 19 that integrally shields two high voltage electric wires 18 (low voltage electric wires may be included). The high voltage electric wire 18 is a wire including a conductor and an insulator (coating), and formed so as to have a required length for electrical connection. The conductor is manufactured from copper, copper alloy or aluminum. Regarding the conductor, a conductor structure that is formed by twisting element wires, or a conductor strip structure of which a cross-section is a rectangular shape or a round shape (for example, a conductor structure which is a rectangular single core or a round single core, and in this case, wire itself is also the strip) may be used. The high voltage electric wire 18 has a configuration of a non-shielding electric wire. A connector (not shown) is provided at end of the high voltage electric wire 18.

In addition, in the embodiment, the high voltage electric wire 18 is used, however the invention is not limited to the embodiment. In other words, a wire where an insulator is provided at a known bus bar may be used.

The electromagnetic shield member 19 is a member for electromagnetic shielding (a member for a countermeasure against electromagnetic waves) covering two high voltage electric wires 18. The electromagnetic shield member 19 is formed with the shield member including a conductive metal sheet, or a cylinder shape of a single body of a metal sheet or the like. The electromagnetic shield member 19 is formed having substantially the same length as the entire length of two high voltage electric wires 18. The electromagnetic shield member 19 is connected to the shield case or the like of the inverter unit 4 through the connector (not shown) or directly.

In addition, in the embodiment, the electromagnetic shield member 19 includes the metal sheet, however the invention is not limited to the embodiment. In other words, if the countermeasure against electromagnetic waves is possible, for example, a braid having a plurality of extremely fine element wires may be used. The braid is formed in a cylinder shape having conductivity.

As described above, the electromagnetic shield member 19 includes the high voltage electric wire 18 as configured of a non-shielding electric wire. In a case where the high voltage electric wire 18 is a known shield electric wire, the invention is not limited to the embodiment.

The outer member 16 has a tube which may insert into the wire assembly 15 and is a bendable tube having flexibility. In the embodiment, a known corrugated tube (a bellow tube) where concavo-convexities (mounts and valleys) are continuous is used (this is one example). When the outer member 16 is properly bent in a state in which the wire assembly 15 is inserted, a bending part 20 is formed. The bending part 20 is arranged and formed at a suitable position.

Reference numeral 21 in the bending part 20 illustrates an outside curvature forming portion where bending R is large. In addition, reference numeral 22 illustrates an inside curvature forming portion where bending R is small. Furthermore, reference numeral 23 illustrates a side portion that is a successive portion of the outside curvature forming portion 21 and the inside curvature forming portion 22.

The wire holder 17 holds (maintains) the curvature of the bending part 20. Accordingly, the member for holding the line of the wire harness 9 is formed by bending a strip (round strip shape) with stiffness. A metal strip (coating is performed according to the need) such as aluminum, copper, iron or the like is desirable as the strip with the stiffness. In addition, as a specific shape of a cross-section, a rectangular shape (angular shape), circle shape, oval shape, H-type shape, hollow shape or the like are desired. The wire holder 17 is formed by being bent to a predetermined shape by a bending machine (not shown) or the like that may freely bend the metal. In the embodiment, the outer member 16 is the **corrugated** tube so that the metal strip (the metal strip of a fine and long planar shape) having a rectangular shape in the cross-section that is easily hooked in a concavo-convexity is used.

The wire holder 17 has a pair of retaining arms 24 that retain opposite ends of the bending part 20 respectively and a connecting arm 25 that connects the retaining arms 24. The pair of the retaining arms 24 are bent and formed in so as to respectively wind outside the outer member 16. The connecting arm 25 is bent and formed so as to have a first unbending stopper 26 at an intermediate part thereof. The first unbending stopper 26 is formed as a portion that contacts the inside curvature forming portion 22 side (through the inside curvature forming portion 22 from a side portion 23) closer than the outside curvature forming portion 21 of the bending part 20. In other words, the first unbending stopper 26 is formed as a portion that regulates the curvature of the bending part 20 such that the curvature of the bending part 20 does not return to the original unbent shape. In the embodiment, the connecting arm 25 is formed so that a twist is included and the position of the first unbending stopper 26 is top portion. The connecting arm 25 is arranged and formed so that a connection portion of the retaining arms 24 are extended from the outside curvature forming portion 21 side.

The wire holder 17 is formed such that the curvature of the bending part 20 is held at three points of the pair of the retaining arms 24 and the first unbending stopper 26.

The wire holder 17 may be attached to the bending part 20 in a state in which the wire holder 17 is somewhat bent beforehand. Otherwise, the bending is initially formed and attached at the position of the bending part 20.

As described above with reference to Fig. 1(a) - Fig. 1(d), the wire harness 9 may hold the curvature of the bending part 20 with the wire holder 17. In other words, there is an advantage in that since the protector is not used to hold the wire holder 17, the wire harness 9 that is low cost and has the versatility may be performed.

### Second Embodiment

Hereinafter, a second embodiment will be described with reference to the drawings. Figs. 2(a) and 2(b) are a perspective view and a side view illustrating another embodiment of the bending part. In addition, the constituent elements similar to those in the first embodiment, described above, are given similar reference numbers thereof, and are thus not specifically described here.

In Figs. 2(a) and 2(b), in a wire harness 31 of a second embodiment, the object of curvature that is held by the wire holder 17 is different from the first embodiment. In other words, the holding object of the wire holder 17 is a bending part 33 of an electric wire bundle 32 that ties a plurality of electric wires (wire).

In the bending part 33, a reference numeral 34 illustrates an outside curvature forming portion that is a side where the bending R is large. In addition, a reference numeral 35 illustrates an inside curvature forming portion that is a side where the bending R is small. Furthermore, a reference numeral 36 illustrates a side portion that is a successive portion of an outside curvature forming portion 34 and an inside curvature forming portion 35.

It goes without saying that the second embodiment has the advantage similar to the first embodiment.

### Third Embodiment

Hereinafter, a third embodiment will be described with reference to the drawings. Figs. 2(c) and 2(d) are a perspective view and a side view illustrating another embodiment of the wire holder. In addition, the constituent elements similar to those in the first embodiment, described above, are given similar reference numbers thereof, and thus are not specifically described here.

In Figs. 2(c) and 2(d), a wire harness 41 is configured including the wire assembly 15, the outer member 16 that is provided outside of the wire assembly 15, and a wire holder 42. The wire holder 42 of the third embodiment is different from the first embodiment.

The wire holder 42 is a member which holds the curvature of the bending part 20 and holds the line of the wire harness 41, and is formed by bending a strip with stiffness. The wire holder 42 is used the same as the wire holder 17 of the first embodiment, even though final holding shapes are different to each other.

The wire holder 42 has a pair of retaining arms 43 that retain opposite ends of the bending part 20 respectively, and a connecting arm 44 that connects the retaining portions 43. The pair of retaining arms 43 and the connecting arm 44 are bent and formed as a shape that winds (winds in a spiral shape) outside of the outer member 16.

The connecting arm 44 is bent and formed such that substantially the entire flexing portion 44 becomes a second unbending stopper 45. The second unbending stopper 45 is formed such that the outside curvature forming portion 21 and the inside curvature forming portion 22 may be held alternatively. Similar to the wire holder 17 of the first embodiment, the second unbending stopper 45 is formed so as to regulate the curvature of the bending part 20 such that the curvature of the bending part 20 does not return to the original unbent shape.

It goes without saying that the third embodiment has an advantage similar to the first embodiment.

### Industrial Applicability

According to the invention, it is possible to provide a wire harness that is low cost and has versatility regarding a wire holding.

### Reference Signs List

1··· hybrid motor vehicle
2··· engine
3··· motor unit
4··· inverter unit
5··· battery
6··· engine room
7··· rear part of vehicle
8··· high voltage wire harness
9··· wire harness
10··· intermediate part
11··· floor body of vehicle
12··· junction block
13··· rear end
14··· front end
15··· wire assembly
16··· outer member
17··· wire holder
18··· high voltage electric wire (wire)
19··· electromagnetic shield member
20··· bending part
21··· outside curvature forming portion
22··· inside curvature forming portion
23··· side portion
24··· retaining arm
25··· connecting arm
26··· first unbending stopper
31··· wire harness
32··· electric wire bundle (wire)
33··· bending part
34··· outside curvature forming portion
35··· inside curvature forming portion
36··· side portion
41··· wire harness
42··· wire holder
43··· retaining arms
44··· connecting arms
45··· second unbending stopper

## Claims

1. A wire harness comprising:
a wire holder (17, 42) with stiffness and provided with a deformed strip, the wire holder (17, 42) holding a curvature of a bending part (20) of one or a plurality of wires (18), or a curvature of an outer member (16) provided in the bending part (20) that is provided outside of the wires (18),
the wire holder (17, 42) including a pair of retaining arms (24, 43) that retain opposite ends of the bending part (20) and a connecting arm (25, 44) that connects the retaining arms (24, 43), and
wherein a first unbending stopper (26) of which an intermediate part is contacted at an inside curvature forming portion (22, 35) closer than an outside curvature forming portion (21, 34) of the bending part (20) is formed, or a second unbending stopper (45) that holds the outside curvature forming portion (21) and the inside curvature forming portion (22) alternatively is formed at the connecting arm (44), **characterised in that** the pair of retaining arms (24, 43) and the connecting arm (25, 44) and one of the first unbending stopper (26) and the second unbending stopper (45) are one piece formed from said deformed strip.

2. A wire harness according to claim 1, wherein
when the wire holder (17, 42) holds the curvature of the outer member (16) the outer member (16) is a corrugated tube.

## Patentansprüche

1. Kabelbaum, der umfasst:
einen Kabel-Halter (17, 42), der Steifigkeit aufweist und mit einem verformten Streifen versehen ist, wobei der Kabel-Halter (17, 42) eine Krümmung eines gebogenen Teils (20) eines Kabels oder einer Vielzahl von Kabeln (18) oder eine Krümmung eines äußeren Elementes (16) enthält, das sich in dem gebogenen Teil (20) befindet, das außerhalb der Kabel (18) vorhanden ist,
der Kabel-Halter (17, 42) ein Paar Haltearme (24, 43), die einander gegenüberliegende Enden des gebogenen Teils (20) halten, sowie einen Verbindungsarm (25, 44) enthält, der die Haltearme (24, 43) verbindet, und
wobei an dem Verbindungsarm (44) eine erste Einrichtung (26) zum Verhindern von Aufbiegen, deren Mittelteil mit einem inneren Krümmungs-Ausbildungsabschnitt (22, 35) enger in Kontakt ist als mit einem äußeren Krümmungs-Ausbildungsabschnitt (21, 34) des gebogenen Teils (20) ausgebildet ist oder als Alternative dazu eine zweite Einrichtung (45) zum Verhindern von Aufbiegen ausgebildet ist, die den äußeren Krümmungs-Ausbildungsabschnitt (21) und den inneren Krümmungs-Ausbildungsabschnitt (22) hält, **dadurch gekennzeichnet, dass**
die paarigen Haltearme (24, 43) und der Verbindungsarm (25, 44) sowie die erste Einrichtung (26) zum Verhindern von Aufbiegen oder die zweite Einrichtung (45) zum Verhindern von Aufbiegen aus einem Stück aus dem verformten Streifen bestehen.

2. Kabelbaum nach Anspruch 1, wobei
wenn der Kabel-Halter (17, 42) die Krümmung des äußeren Elementes (16) hält, das äußere Element (16) ein Wellrohr ist.

## Revendications

1. Faisceau de câbles comprenant:
un élément de maintien de câbles (17, 42) présentant une certaine rigidité et pourvu d'une bande déformée, l'élément de maintien de câbles (17, 42) maintenant une courbure d'une partie coudée (20) d'un ou d'une pluralité de câbles (18), ou une courbure d'un élément extérieur (16) prévu au niveau de la partie coudée (20) qui est placé à l'extérieur des câbles (18),
l'élément de maintien de câbles (17, 42) comprenant une paire de bras de retenue (24, 43) qui retiennent des extrémités opposées de la partie coudée (20) et un bras de raccordement (25, 44) qui raccorde les bras de retenue (24, 43), et un premier élément anti-redressement (26), dont une partie intermédiaire est en contact plus près d'une partie de formation de coude intérieure (22, 35) que d'une partie de formation de coude extérieure (21, 34) de la partie coudée (20), étant formé, ou un second élément anti-redressement (45) qui maintient la partie de formation de coude extérieure (21) et la partie de formation de coude intérieure (22) étant formé en variante au niveau du bras de raccordement (44), **caractérisé en ce que**
la paire de bras de retenue (24, 43) et le bras de raccordement (25, 44) et l'un du premier élément anti-redressement (26) et du second élément anti-redressement (45) constituent une seule pièce formée à partir de ladite bande déformée.

2. Faisceau de câbles selon la revendication 1, dans lequel
lorsque l'élément de maintien de câbles (17, 42) maintient la courbure de l'élément extérieur (16), l'élément extérieur (16) est un tuyau annelé.
